# EUROPÄISCHE PATENTSCHRIFT

(11) **EP 1 308 376 B1**
(45) Veröffentlichungstag und Bekanntmachung des Hinweises auf die Patenterteilung: **09.03.2005**
(21) Anmeldenummer: 02024014.9
(22) Anmeldetag: 26.10.2002
(51) Int. Cl.: B62D 33/06

(54) **Kabinenzusammenbau für Fahrzeuge**
Cab assembly for vehicles
Ensemble cabine pour véhicules

(30) Priorität: 30.10.2001 US 21193
(43) Veröffentlichungstag der Anmeldung: 07.05.2003
(73) Patentinhaber: DEERE & COMPANY, Moline, Illinois 61265-8098 (US)
(72) Erfinder: El-Zein, Mohamad Samih, Bettendorf, IA 52722 (US)
(74) Vertreter: Lau-Loskill, Philipp, Dipl.-Phys.

(56) Entgegenhaltungen:
- WO-A-97/41005
- WO-A-99/16659
- AT-B- 355 922
- DE-A- 4 302 489
- GB-A- 2 194 921
- US-A- 4 669 565
- PATENT ABSTRACTS OF JAPAN vol. 016, no. 122 (M-1226), 27. März 1992 (1992-03-27) -& JP 03 287430 A (YANMAR DIESEL ENGINE CO LTD), 18. Dezember 1991 (1991-12-18)

## Beschreibung

Die Erfindung betrifft einen Kabinenzusammenbau für landwirtschaftliche Fahrzeuge mit einem Basisteil, welches erste Rahmenelemente enthält, und einem auf dem Basisteil befestigbaren Dachteil, welches zweite Rahmenelemente enthält wobei die ersten Rahmenelemente zueinander beabstandet sind und sich an einem hinteren Teil des Basisteils nach oben erstrecken, die zweiten Rahmenelemente zueinander beabstandet sind und sich an einem hinteren Teil des Dachteils nach unten erstrecken, und wobei die Abstände der ersten Rahmenelemente des Basisteils derart gewählt sind, dass die unteren Enden der beabstandeten zweiten Rahmenelemente des Dachteils mit den oberen Enden der beabstandeten ersten Rahmenelemente des Basisteils aneinanderfügbar zusammenpassen.

In der US 4,669,565 wird eine Kabinenkonstruktion nach dem Stand der Technik offenbart.

Kabinen für landwirtschaftliche Fahrzeuge werden normalerweise aus mehreren Einzelteilen hergestellt. Diese Teile werden herkömmlicher Weise aus Metall gefertigt, um den verschiedenen Kräften und Belastungen die am Fahrzeug auftreten standhalten zu können. Die Teile werden entweder geschnitten und/oder gestanzt und dann miteinander verschweißt oder verschraubt. Aufgrund der Löcher, die in dieser Zusammerhauweise entstehen, ist es schwierig, die Kabine gegen Luftschall zu isolieren, auch wenn die Löcher abgedichtet werden. Es besteht somit der Bedarf nach einem Kabinenzusammenbau, der die Festigkeit und Steifigkeit eines geschweißten Metallzusammenbaus liefert und gleichzeitig in der Lage ist, die Kabine gegen Luftschall zu isolieren.

In der JP 03287430 A (siehe Patent Abstracts of Japan, vol. 016, no. 122 (M-1226)) wird eine Kabinenkonstruktion offenbart, die den Zusammenbau eines Schutzrahmens mit einer aus Kunstharz gefertigten Traktorkabine offenbart. Der Schutzrahmen erstreckt sich teilweise unterhalb der Kabine und weist einen oberen und unteren Rahmenteil auf die miteinander verschraubt werden. In der Kabine sind dafür entsprechende Durchlassöffnungen vorgesehen.

In der WO 99/16659 A wird eine Verfahren zur Montage eines selbsttragenden Fahrzeugdaches offenbart. Dazu ist ein selbsttragendes Fahrzeugdach mit sich nach unten erstreckenden Rahmenelementen ausgerüstet, welche mit sich nach oben erstreckenden Rahmenelementen einer Fahrzeugkarosse verbunden werden, wobei das Fahrzeugdach mehrere in Sandwichbauweise zusammengebaute Komponenten aufweist um eine entsprechende Steifigkeit zu bieten.

Die der Erfindung zugrunde liegende Aufgabe wird darin gesehen, eine Kabinenkonstruktion für landwirtschaftliche Fahrzeuge der eingangs genannten Art anzugeben, durch welches die vorgenannten Probleme überwunden werden. Insbesondere soll ein Kabinenzusammenbau vorgeschlagen werden, der die Kabinen gegen Luftschall isoliert und des Weiteren stabil und steif sowie sicher gegen Korrosion ist. Ein weiterer Bestandteil der Aufgabe ist es, einen Kabinenzusammenbau vorzuschlagen, der kostengünstig herstellbar und einfach zusammenbaubar ist.

Die Aufgabe wird erfindungsgemäß durch die Lehre des Patentanspruchs 1 gelöst. Weitere vorteilhafte Ausgestaltungen gehen aus den Unteransprüchen hervor.

Erfindungsgemäß wird ein Kabinenzusammenbau für landwirtschaftliche Fahrzeuge der eingangs genannten Art derart ausgebildet, dass der Kabinenzusammenbau Außerdem ein Innenteil aufweist, welches in das Basisteil einsetzbar und dort befestigbar ist, wobei das Basisteil sich horizontal erstreckende Rahmenelemente aufweist, die mit dem Innenteil verbindbar sind.

Vorzugsweise wird das Innenteil an einer Unterseite und an einer Hinterseite des Innenteils mit den sich horizontal erstreckenden Rahmenelementen des Basisteils und mit einem Hinterteil des Basisteils verbunden.

In einer besonders bevorzugten Ausgestaltung der Erfindung bestehen die drei Kabinenzusammenbauteile aus gegossenem Material, vorzugsweise aus einem Polymer-Verbundwerkstoff, sind somit kostengünstig herzustellen, korrosionsfest und stellen in zusammengefügter Form eine Kabine in Ganzschalenbauweise dar. Des Weiteren wird durch die besondere Ausgestaltung der Erfindung die notwendige Festigkeit und Steifheit geboten.

Die einfache, erfindungsgemäße Zusammenbauweise ermöglicht den Einsatz von nichtkonventionellen Fügemitteln, vorzugsweise Klebstoffen oder anderen adhesiven Fügemitteln, und bietet somit eine zuverlässige Isolierung gegen Luftschall, da keine Bohrungen oder Löcher bei derartigen Befestigungs- bzw. Fügemethoden abgedichtet werden müssen.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine perspektivische Ansicht eines erfindungsgemäßen Kabinenzusammenbaus mit zusammengebauten Einzelteilen,
- Fig. 2: eine perspektivische Ansicht eines Dachteils,
- Fig. 3: eine perspektivische Ansicht eines Basisteils und
- Fig. 4: eine perspektivische Ansicht eines Innenteils.

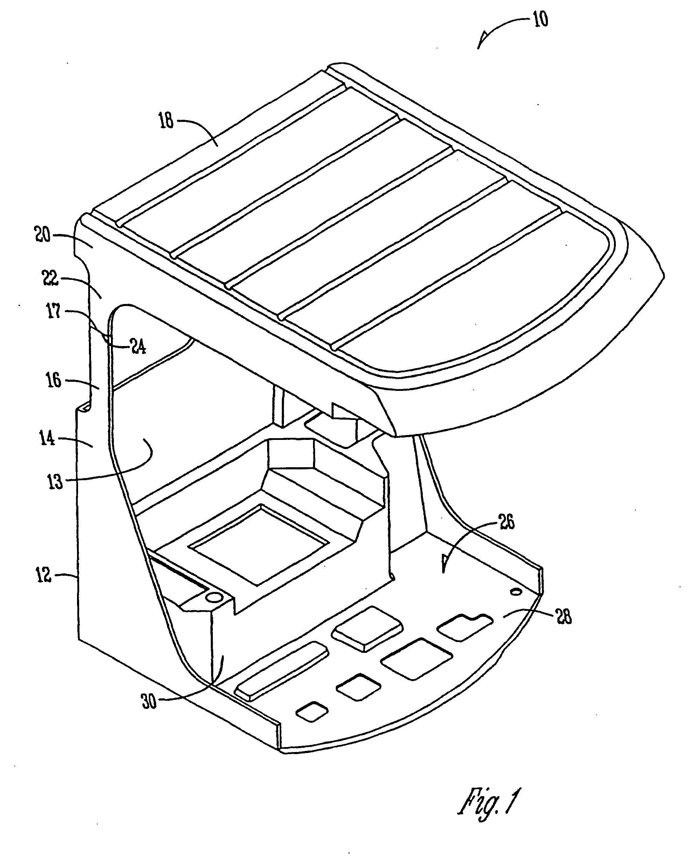

Der in Fig. 1 dargestellte Aufbau einer Ganzschalenkabine 10 enthält drei Teile. Die Struktur und Zusammenbauweise dieser Teile ist Gegenstand dieser Erfindung.

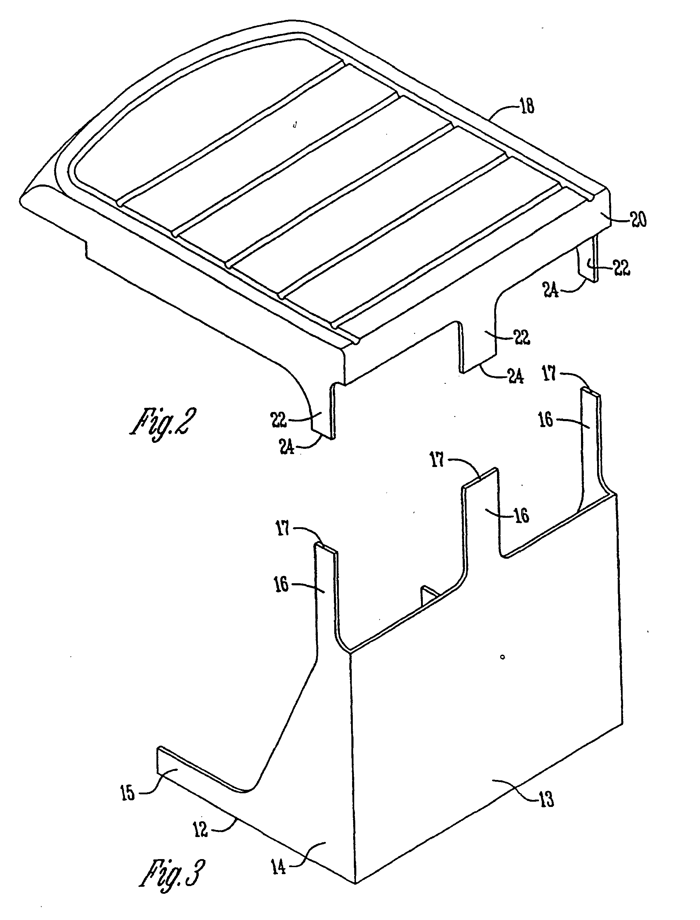

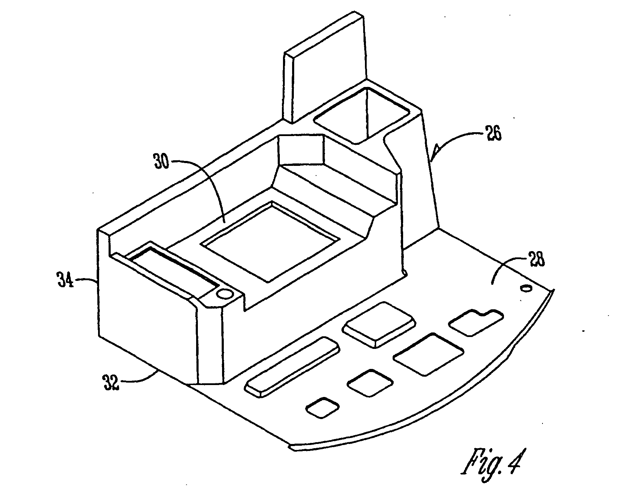

Wie Fig. 3 zeigt, enthält der Kabinenzusammenbau ein Basisteil 12 mit einem hinteren Teil 14. Mehrere zueinander beabstandete erste Rahmenelemente 16 erstrecken sich vom hinteren Teil 14 aus nach oben.

Ein Dachteil 18 (Fig. 2) ist auf dem Basisteil 12 befestigt. Das Dachteil 18 enthält einen hinteren Teil 20 von dem aus sich mehrere zueinander beabstandete zweite Rahmenelemente 22 nach unten erstrecken. Die ersten Rahmenelemente 16 des Basisteils 12 sind derart zueinander beabstandet angeordnet, dass die unteren Enden 24 der zweiten Rahmenelemente 22 mit den oberen Enden 17 der ersten Rahmenelemente 16 des Basisteils 12 zusammenpassen und aneinandergefügt werden können wie in Fig. 1 gezeigt ist. Die ersten Rahmenelemente 16 des Basisteils 12 werden mit den zweiten Rahmenelementen 22 des Dachteils 18 verbunden, indem eine vorgebbare Menge an Klebemittel zur Verbindung der Teile 12, 18 verwendet wird und die Teile unter Aufbringen von Druck fixiert werden.

Ein Innenteil 26, das in einer Ausgestaltung in Fig. 4 gezeigt wird, enthält einen Bodenbereich 28 und einen Konsolenbereich 30. Herkömmlicherweise ist das Innenteil 26 aus mehreren Einzelteilen hergestellt um die einzelnen zur Bedienung eines landwirtschaftlichen Fahrzeugs notwendigen Komponenten unterzubringen. Im vorliegenden Fall ist das Innenteil 26 jedoch als einteiliges Stück hergestellt. Des Weiteren können, aufgrund der flexiblen Konstruktionsgestaltung, zur Erlangung der endgültigen Ausbildung viele andere Teile hinzugefügt werden.

Das Innenteil 26 ist in das Basisteil 12 eingelassen und dort befestigt. Das Innenteil 26 ist mit dem Basisteil 12 verbunden, indem eine vorgebbare Menge an Klebemittel zur Verbindung der Unterseite 32 und der Hinterseite 34 des Innenteils 26 mit sich horizontal erstreckenden Rahmenelementen 15 des Basisteils 12 und mit dem Hinterteil 13 des Basisteils 12 verwendet wird und die Teile unter Aufbringen von Druck fixiert werden.

Die drei Teile 12, 18, 26 können aus einem beliebigen, eine notwendige Festigkeit und Steifigkeit aufweisenden Material gefertigt werden, wobei die Teile 12, 18, 26 vorzugsweise aus einem Polymerverbund hergestellt sind.

Die Struktur der drei Teile 12, 18, 26 und die Art, wie diese miteinander verbunden sind, lassen erkennen, dass eine Abdichtung oder Versiegelung geschaffen wird, die einen verbesserten Luftschallschutz bietet. Des Weiteren können aufgrund der flexiblen Konstruktionsgestaltung viele Zubehörteile in der fertigen Ausbildung miteinander kombiniert werden. Ferner werden mit dem hier zum Gießen der Teile eingesetzten Material Korrosionsprobleme eliminiert.

## Patentansprüche

1. Kabinenzusammenbau für landwirtschaftliche Fahrzeuge mit einem Basisteil (12), welches erste Rahmenelemente (16) enthält, und einem auf dem Basisteil (12) befestigbaren Dachteil (18), welches zweite Rahmenelemente (22) enthält, wobei die ersten Rahmenelemente (16) zueinander beabstandet sind und sich an einem hinteren Teil (14) des Basisteils (12) nach oben erstrecken, die zweiten Rahmenelemente (22) zueinander beabstandet sind und sich an einem hinteren Teil (20) des Dachteils (18) nach unten erstrecken, und wobei die Abstände der ersten Rahmenelemente (16) des Basisteils (12) derart gewählt sind, dass die unteren Enden (24) der beabstandeten zweiten Rahmenelemente (22) des Dachteils (18) mit den oberen Enden (17) der beabstandeten ersten Rahmenelemente (16) des Basisteils (12) aneinanderfügbar zusammenpassen, **dadurch gekennzeichnet, dass** der Kabinenzusammenbau Außerdem ein Innenteil (26) aufweist, welches in das Basisteil (12) einsetzbar und dort befestigbar ist, wobei das Basisteil (12) sich horizontal erstreckende Rahmenelemente (15) aufweist, die mit dem Innenteil (26) verbindbar sind.

2. Kabinenzusammenbau nach Anspruch 1, **dadurch gekennzeichnet, dass** das Innenteil an einer Unterseite (32) und an einer Hinterseite (34) des Innenteils (26) mit den sich horizontal erstreckenden Rahmenelementen (15) des Basisteils (12) und mit einem Hinterteil (13) des Basisteils (12) verbindbar ist.

3. Kabinenzusammenbau nach Anspruch 1 oder 2, **dadurch gekennzeichnet, dass** das Basisteil (12) und/oder das Dachteil (18) und/oder das Innenteil (26) aus einem gegossenen Material, insbesondere aus einem Polymerverbundwerkstoff bestehen.

4. Kabinenzusammenbau nach einem der vorhergehenden Ansprüche, **dadurch gekennzeichnet, dass** das Basisteil (12) und/oder das Dachteil (18) und/oder das Innenteil (26) unter Verwendung eines Klebemittels miteinander verbunden sind.

## Claims

1. A cab assembly for agricultural vehicles, with a base part (12), which includes first frame elements (16), and a roof part (18) which can be fixed on the base part (12) and includes second frame elements (22), wherein the first frame elements (16) are spaced from one another and extend upwards at a rear part (14) of the base part (12), the second frame elements (22) are spaced from one another and extend downwards at a rear part (20) of the roof part (18), and wherein the spacings of the first frame elements (16) of the base part (12) are so selected that the lower ends (24) of the spaced second frame elements (22) of the roof part (18) match up with and can be joined to the upper ends (17) of the spaced first frame elements (16) of the base part (12), **characterized in that** the cab assembly moreover comprises an inner part (26) which can be fitted into and be fixed in the base part (12), wherein the base part (12) comprises horizontally extending frame elements (15) which can be connected to the inner part (26).

2. A cab assembly according to claim 1, **characterized in that** the inner part can be connected at an underside (32) and at a rear side (34) of the inner part (26) to the horizontally extending frame elements (15) of the base part (12) and to a rear part (13) of the base part (12).

3. A cab assembly according to claim 1 or 2, **characterized in that** the base part (12) and/or the roof part (18) and/or inner part (26) consist of a cast material, especially of a composite polymer material.

4. A cab assembly according to any of the preceding claims, **characterized in that** the base part (12) and/or the roof part (18) and/or inner part (26) are joined together using an adhesive.

## Revendications

1. Ensemble cabine pour véhicule agricole, du type se composant d'une partie de base (12), qui comporte des premiers éléments de cadre (16), et une partie de toit (18), pouvant être fixée à la partie de base (12), ladite partie de toit (18) comportant des seconds éléments de cadre (22), les premiers éléments de cadre (16) étant espacés l'un de l'autre, et s'étendant vers le haut sur une section arrière (14) de la partie de base (12), les seconds éléments de cadre (22) étant espacés l'un de l'autre, et s'étendant vers le bas sur une section arrière (20) de la partie de toit (18), la distance entre les premiers éléments de cadre (16) de la partie de base (12) étant choisie de telle sorte que les extrémités inférieures (24) des seconds éléments de cadre (22) espacés de la partie de toit (18) s'adaptent aux extrémités supérieures (17) des éléments de cadre (16) espacés de la partie de base (12), en s'assemblant les unes avec les autres, **caractérisé en ce que** l'ensemble cabine présente, au surplus, une partie interne (26), qui peut être insérée dans la partie de base (12) et y être fixée, la partie de base (12) comportant des éléments de cadre (15), s'étendant horizontalement et qui peuvent être réunis à la partie interne (26).

2. Ensemble cabine selon la revendication 1, **caractérisé en ce que** la partie interne peut être réunie par une face inférieure (32) et par une face arrière (34) de la partie interne (26), aux éléments de cadre s'étendant horizontalement (15) de la partie de base (12) et à une partie arrière (13) de la partie de base (12).

3. Ensemble cabine selon l'une ou l'autre des revendications 1 ou 2, **caractérisée en ce que** la partie de base (12) et/ou la partie de toit (18) et/ou la partie interne (26) sont réalisées en un matériau coulé, en particulier en un matériau polymère composite.

4. Ensemble cabine selon l'une quelconque des revendications précédentes, **caractérisé en ce que** la partie de base (12) et/ou la partie de toit (18) et/ou la partie interne (26) sont réunies au moyen d'un agent adhésif.
